(19) Europäisches Patentamt / European Patent Office / Office européen des brevets

(11) **EP 3 190 736 A1**

(12) **EUROPEAN PATENT APPLICATION**
published in accordance with Art. 153(4) EPC

(43) Date of publication:
**12.07.2017 Bulletin 2017/28**

(21) Application number: **15848197.8**

(22) Date of filing: **13.05.2015**

(51) Int Cl.:
*H04L 1/18* (2006.01)

(86) International application number:
**PCT/CN2015/078892**

(87) International publication number:
**WO 2016/054915 (14.04.2016 Gazette 2016/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **09.10.2014 CN 201410529387**

(71) Applicant: **ZTE Corporation**
**Shenzhen, Guangdong 518057 (CN)**

(72) Inventors:
• **MENG, Bo**
**Shenzhen**
**Guangdong 518057 (CN)**
• **HUANG, Jun**
**Shenzhen**
**Guangdong 518057 (CN)**
• **LI, Ping**
**Shenzhen**
**Guangdong 518057 (CN)**
• **ZHANG, Ting**
**Shenzhen**
**Guangdong 518057 (CN)**

(74) Representative: **Regimbeau**
**20, rue de Chazelles**
**75847 Paris Cedex 17 (FR)**

(54) **TERMINAL EQUIPMENT AND METHOD FOR FEEDBACK OF HYBRID AUTOMATIC REPEAT REQUEST IN MULTI-SERVICE MODE**

(57) Provided are a terminal equipment and a method for feedback of hybrid automatic repeat request applied in a multi-service mode, relating to a wireless network technology for transmission by utilizing terminal feedback information. The method includes: performing HARQ feedback on a resource location corresponding to each service in a current subframe, or performing HARQ feedback on a resource location corresponding to each code stream in each service in the current subframe, by the terminal equipment according to a comparison result of a total number of code streams IALL for all services in the current subframe and a set threshold value.

FIG.1

## Description

## TECHNICAL FIELD

The present invention relates to a wireless network technology for transmission by utilizing terminal feedback information, and more particularly to a method and a device for performing HARQ (Hybrid Automatic Repeat Request) feedback by using a PUCCH.

## BACKGROUND

In a LTE (Long Term Evolution) protocol, it is required to create different bearers for different levels of QCIs (QoS Class Identifier), and multiple bearers that are scheduled in the same subframe by the same user are only supported to be packaged into one scheduling packet, with the same transmission mode and the same modulation mode, so that the packet error rates are the same; and the bearer which is relatively strict in packet loss rate requirements is typically configured to be of an AM mode, so that the accuracy rate of air interface transmission is improved, the packet loss rate may be reduced by means of re-transmission, but the packet delay may be increased.

At present, multiple bearers scheduled in the same subframe by the same user are packaged into independent scheduling packets or scheduling packets with identical attributes (for example, identical delay requirements or identical packet loss rate requirements), different bears can employ different modulation patterns and transmission modes according to their own needs to ensure the packet loss rate, reduce the delay caused by air interface re-transmission, and make a high-level scheduling strategy be more flexible.

In the LTE protocol, HARQ-ACK information of a downlink scheduling packet is fed back mainly by a PUCCH (Physical Uplink Control Channel). When UE (User Equipment) feeds back the HARQ-ACK by employing a format la/lb, it is necessary to calculate a resource location $n_{PUCCH}^{(l)}$ of the PUCCH from a starting location $n_{CCE}$ of a CCE (Control Channel Element) of a PDCCH (Physical Downlink Control Channel) in a case of non-cross-carrier scheduling and the presence of the PDCCH. When one and the same DCI (Downlink Control Information) contains multiple pieces of service information, the problem related to resource conflicts of the PUCCH occurs because multiple services have the same $n_{CCE}$.

## SUMMARY

The present invention provides a terminal equipment and a method for feedback of hybrid automatic repeat request applied in a multi-service mode, to solve the problem related to resource conflicts of a PUCCH when one and the same DCI contains multiple pieces of service information.

Provided is a method for feedback of hybrid automatic repeat request (HARQ) applied in a multi-service mode, including:

performing HARQ feedback on a resource location corresponding to each service in a current subframe, or performing HARQ feedback on a resource location corresponding to each code stream in each service in the current subframe, by a terminal equipment according to a comparison result of a total number of code streams IALL for all services in the current subframe and a set threshold value.

Optionally, in the above method, the process of performing HARQ feedback on the resource location corresponding to each service in the current subframe by the terminal equipment according to the comparison result of the total number of code streams IALL for all services in the current subframe and the set threshold value includes:

when the terminal equipment determines that the total number of code streams IALL for all services in the current subframe is greater than the set threshold value, calculating a starting resource location of each service in the current subframe according to an offset between the starting resource location of each service in the current subframe and a starting resource location $n_{PUCCH}^{(l)}$ of a physical uplink control channel (PUCCH), respectively, and performing HARQ feedback on the calculated starting resource location of each service.

Optionally, in the above method, the process of performing HARQ feedback on the resource location corresponding to each code stream in each service in a current subframe by terminal equipment according to the comparison result of the total number of code streams IALL for all services in the current subframe and the set threshold value includes:

when the terminal equipment determines that the total number of code streams IALL for all services in the current subframe is less than or equal to the set threshold value, calculating a starting resource location of each code stream in each service in the current subframe according to an offset between the starting resource location of each code stream in each service in the current subframe and a starting resource location $n_{PUCCH}^{(l)}$ of a PUCCH, respectively, and performing HARQ feedback on the calculated starting resource location of each code stream in each service.

Optionally, in the above method, the set threshold value is half of a total number $N_{CCE}$ of control channel elements (CCEs) occupied by downlink control information (DCI).

Optionally, in the above method, the calculating a starting resource location of each service in the current subframe by the terminal equipment according to an offset between the starting resource location of each service in the current subframe and a starting resource location $n_{PUCCH}^{(1)}$ of a PUCCH, respectively includes:

calculating the starting resource location of each service in the current subframe in accordance with a following formula:

$$n_{PUCCH}^{(1,n)} = n_{PUCCH}^{(1)} + f\left(n\right),$$

where the $n_{PUCCH}^{(1,n)}$ is a starting resource location of a service n in the current subframe, the n is a service index number, n=0, 1, ..., N-1, the N is the total number of services in the current subframe, and the f(n) is an offset between the starting resource location of the service n and the starting resource location $n_{PUCCH}^{(1)}$ of the PUCCH.

Optionally, in the above method, f(n)=n or $f(n) = \left\lfloor \frac{N_{CCE}}{N} \right\rfloor * n$.

Optionally, in the above method, the calculating a starting resource location of each code stream in each service in the current subframe by the terminal equipment according to an offset between the starting resource location of each code stream in each service in the current subframe and a starting resource location $n_{PUCCH}^{(1)}$ of a PUCCH, respectively includes:

calculating the starting resource location of each code stream in each service in the current subframe according to a following formula:

$$n_{PUCCH}^{(1,n,i)} = n_{PUCCH}^{(1)} + g\left(n,i\right),$$

where the $n_{PUCCH}^{(1,n,i)}$ is a starting resource location of a code stream i in the service n in the current subframe;
the n is a service index number, n=0, 1, ..., N-1, the N is the total number of services in the current subframe;
the i is a code stream index number, i=0,1, ..., I-1, the I is the number of code streams of the service n; and
the g(n, i) is an offset between the starting resource location of the code stream i in the service n in the current subframe and the starting resource location $n_{PUCCH}^{(1)}$ of the PUCCH.

Optionally, in the above method, g(n, i)=i*N+n or g(n, i)=n*I+i.

The present invention provides a terminal equipment, including:

a first unit, which is configured to determine a comparison result of a total number of code streams IALL for all services in a current subframe and a set threshold value; and
a second unit, which is configured to perform HARQ feedback on a resource location corresponding to each service in a current subframe, or perform HARQ feedback on a resource location corresponding to each code stream in each service in a current subframe, according to a comparison result, which is determined by the first unit, of the total number of code streams IALL for all services in the current subframe and a set threshold value.

Optionally, in the above terminal equipment, the second unit is configured to, when the first unit determines that the total number of code streams IALL for all services in the current subframe is greater than the set threshold value, calculate a starting resource location of each service in the current subframe according to an offset between the starting resource location of each service in the current subframe and a starting resource location $n_{PUCCH}^{(1)}$ of a physical uplink control channel (PUCCH), respectively, and perform HARQ feedback on the calculated starting resource location of each service.

Optionally, in the above terminal equipment, the second unit is configured to, when the first unit determines that the total number of code streams IALL for all services in the current subframe is less than or equal to the set threshold value, calculate a starting resource location of each code stream in each service in the current subframe according to an offset between the starting resource location of each code stream in each service in the current subframe and a starting resource location $n_{PUCCH}^{(1)}$ of a PUCCH, respectively, and perform HARQ feedback on the calculated starting resource location of each code stream in each service.

Optionally, in the above terminal equipment, the set threshold value is half of a total number $N_{CCE}$ of control channel elements (CCEs) occupied by downlink control information (DCI).

Optionally, in the above terminal equipment, the second unit is configured to calculate the starting resource location of each service in the current subframe in accordance with a following formula:

$$n_{PUCCH}^{(1,n)} = n_{PUCCH}^{(1)} + f\left(n\right),$$

where the $n_{PUCCH}^{(1,n)}$ is a starting resource location of a service n in the current subframe, the n is a service index number, n=0, 1, ..., N-1, the N is the total number of services in the current subframe, and the f(n) is an offset between the starting resource location of the service n and the starting resource location $n_{PUCCH}^{(1)}$ of the PUCCH.

Optionally, in the above terminal equipment, f(n)=n or $f(n) = \left\lfloor \dfrac{N_{CCE}}{N} \right\rfloor * n$.

Optionally, in the above terminal equipment, the second unit is configured to calculate the starting resource location of each code stream in each service in the current subframe according to a following formula:

$$n_{PUCCH}^{(1,n,i)} = n_{PUCCH}^{(1)} + g\left(n, i\right),$$

where the $n_{PUCCH}^{(1,n,i)}$ is a starting resource location of a code stream i in a service n in the current subframe;
the n is a service index number, n=0, 1, ..., N-1, the N is the total number of services in the current subframe;
the i is a code stream index number, i=0,1, ..., I-1, the I is number of code streams of the service n; and the g(n, i) is an offset between the starting resource location of the code stream i in the service n in the current subframe and the starting resource location $n_{PUCCH}^{(1)}$ of the PUCCH.

Optionally, in the above terminal equipment, g(n, i)=i*N+n or g(n, i)=n*I+i.

A computer readable storage medium storing a computer-executable instruction, which is configured to perform the method as described in any one of the above.

By employing a technical scheme of the present invention, when multiple services of UE in the same TTI (Transmission Time Interval) use the same DCI and resources of the PUCCH required when HARQ-ACK feedback is performed on each service are the same, the problem related to resource conflicts may be effectively solved. Compared with the related art, the technical scheme of the present invention not only achieves an effect of distinguishing the resources of the PUCCH, but also effectively combines existing information, thereby avoiding extra signaling overheads when HARQ-ACK feedback is performed on multiple services of a downlink.

**BRIEF DESCRIPTION OF DRAWINGS**

FIG. 1 is a flow diagram of a method according to an embodiment of the present invention; and

FIG. 2 is a schematic diagram showing the composition of terminal equipment for implementing an HARQ feedback method according to an embodiment of the present invention.

**DETAILED DESCRIPTION**

Embodiments of the present invention will be described below in detail with reference to the accompanying drawings. It is to be noted that, in the absence of conflicts, features of the embodiments and examples herein may be arbitrarily combined with each other.

A first embodiment

In order to solve the problem of resource conflicts of a PUCCH, the inventor proposes that a virtual CCE can be used to determine a resource location occupied by each service, that is, resources of the PUCCH are distinguished based on the resource location $n_{PUCCH}^{(1)}$ along with an offset value of the virtual CCE, and the offset value of the virtual CCE is related to a the number of services and the number of code streams. In this way, the isolation of the resources of the PUCCH can be maximized while the signaling overhead is reduced, and the throughput of a downlink is effectively enhanced.
The present embodiment provides a method for feedback of hybrid automatic repeat request applied in a multi-service mode, including the following operations:

terminal equipment performs HARQ feedback on a resource location corresponding to each service in a current sub frame according to a comparison result of the total number of code streams IALL for all services in the current subframe and a set threshold value, or performs HARQ feedback on a resource location corresponding to each code stream in each service in a current subframe according to a comparison result of the total number of code streams IALL for all services in the current subframe and a set threshold value,

where the process of performing HARQ feedback on a resource location corresponding to each service in a current subframe by the terminal equipment according to a comparison result of the total number of code streams IALL for all services in the current subframe and a set threshold value includes:

when the terminal equipment determines that the total number of code streams IALL for all services in the current subframe is greater than the set threshold value, the terminal equipment calculates a starting resource location of each service in the current subframe according to an offset between the starting resource location of each service in the current subframe and a starting resource location $n_{PUCCH}^{(1)}$ of a

physical uplink control channel (PUCCH), respectively, and performs HARQ feedback on the calculated starting resource location of each service.

The process of performing HARQ feedback on a resource location corresponding to each code stream in each service in the current subframe by the terminal equipment according to a comparison result of the total number of code streams IALL for all services in the current subframe and a set threshold value includes:

when the terminal equipment determines that the total number of code streams IALL for all services in the current subframe is less than or equal to the set threshold value, the terminal equipment calculates a starting resource location of each code stream in each service in the current subframe according to an offset between the starting resource location of each code stream in each service in the current subframe and a starting resource location $n_{PUCCH}^{(1)}$ of a PUCCH, respectively, and performs HARQ feedback on the calculated starting resource location of each code stream in each service.

The set threshold involved in the present embodiment is related to the total number $N_{CCE}$ of control channel elements (CCE) occupied by DCI, and is typically less than $N_{CCE}$. Optionally, the set threshold value is half of the $N_{CCE}$.

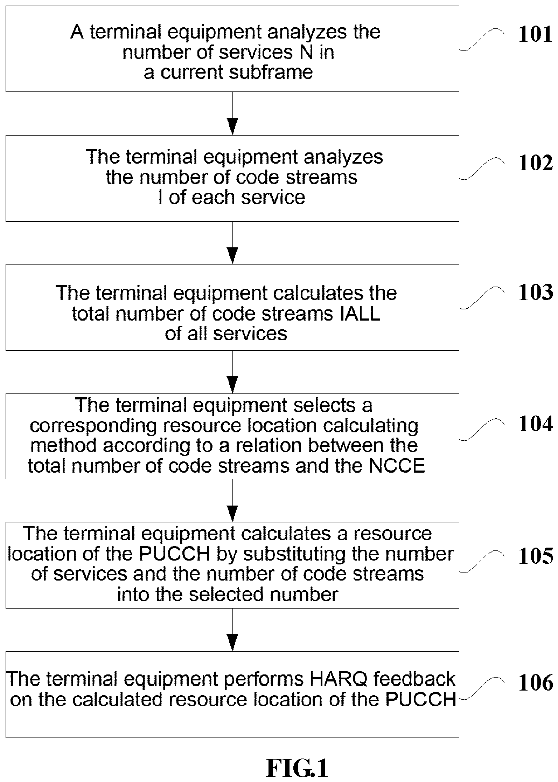

The process of implementing the above method in optional solutions will be illustrated below with reference to accompanying drawings. This process is shown as FIG. 1, including the following steps:

In step 101, a terminal equipment analyzes the number of services N in a current subframe.

In step 102, the terminal equipment analyzes the number of code streams I of each service.

In step 103, the terminal equipment calculates the total number of code streams IALL of all services.

In step 104, the terminal equipment selects a corresponding resource location calculating method according to a relation between the total number of code streams and the $N_{CCE}$.

The $N_{CCE}$ represents the total number of CCEs occupied by the DCI.

When the total number of code streams IALL is greater than half of the $N_{CCE}$, the terminal equipment selects a resource location calculating method 1, or selects a resource location calculating method 2. The two calculating methods are described as follows.

The method 1 is described as follows: feedback is performed in accordance with the number of services, and each service only requires one resource of the PUCCH, and the calculating method is as follows:

a resource location of a $(n+1)^{th}$ service corresponding to the DCI is calculated according to a formula

$$n_{PUCCH}^{(1,n)} = n_{PUCCH}^{(1)} + f(n),$$

where n is a service index number, n=0, 1, ..., N-1, N is the total number of services in the current subframe,

f(n) is an offset between a starting resource location of a service n and the starting resource location $n_{PUCCH}^{(1)}$ of the PUCCH, the form of which may be as follows:

$$f(n)=n \text{ or } f(n) = \left\lfloor \frac{N_{CCE}}{N} \right\rfloor * n.$$

The method 2 is described as follows: feedback is performed in accordance with the number of code streams, and services for multiple code streams require multiple resources of the PUCCH, and the calculating method is as follows:

a resource location of a $(n+1)^{th}$ code stream corresponding to the DCI is calculated according to a formula $n_{PUCCH}^{(1,n,i)} = n_{PUCCH}^{(1)} + g(n,i),$

where n is a service index number, n=0, 1, ..., N-1, N is the total number of services in the current subframe; i is a code stream index number, i=0,1, ..., I-1, I is the number of code streams of the service n; and g(n, i) is an offset between a starting resource location of a code stream i in the service n and the starting resource location $n_{PUCCH}^{(1)}$ of the PUCCH, the form of which may be as follows: g(n, i)=i*N+n or g(n, i)=n*I+i.

In step 105, the terminal equipment calculates a resource location of the PUCCH by substituting the number of services and the number of code streams into the selected formula.

In step 106, the terminal equipment performs HARQ feedback on the calculated resource location of the PUCCH.

A second embodiment

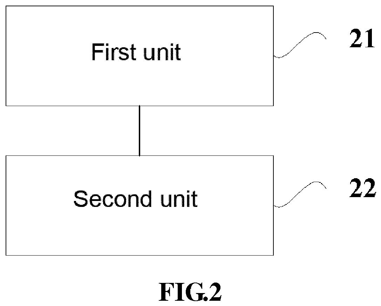

As shown in FIG. 2, the present embodiment provides a terminal equipment, which may implement the method of the above first embodiment and at least includes the following modules:

a first unit 21, which is configured to determine a comparison result of the total number of code streams IALL for all services in the current subframe and a set threshold value; and
where the set threshold value is related to the total number $N_{CCE}$ of CCEs occupied by DCI. Optionally, the set threshold value is half of the $N_{CCE}$.

a second unit 22, which is configured to perform HARQ feedback on a resource location corresponding to each service in a current subframe according to a comparison result, which is determined by the first unit 21, of the total number of code streams IALL for all services in the current subframe and a set threshold value, or perform HARQ feedback on a resource location corresponding to each code stream in each service in a current subframe according to a comparison result, which is determined by the first unit 21, of the total number of code streams IALL for all services in the current subframe and a set threshold value,

where the process of performing HARQ feedback on a resource location corresponding to each service in the current subframe by the second unit 22 includes:

when the first unit 21 determines that the total number of code streams IALL for all services in the current subframe is greater than the set threshold value, the second unit 22 calculates a starting resource location of each service in the current subframe according to an offset between the starting resource location of each service in the current subframe and a starting resource location $n_{PUCCH}^{(1)}$ of a physical uplink control channel (PUCCH), respectively, and performs HARQ feedback on the calculated starting resource location of each service;

the starting resource location of each service in the current subframe may be calculated in accordance with the following formula:

$$n_{PUCCH}^{(1,n)} = n_{PUCCH}^{(1)} + f(n),$$

where $n_{PUCCH}^{(1,n)}$ is a starting resource location of a service n in the current subframe, n is a service index number, n=0, 1, ..., N-1, N is the total number of services in the current subframe, f(n) is an offset between the starting resource location of the service n and the starting resource location $n_{PUCCH}^{(1)}$ of the PUCCH.

In the above formula, f(n) may be calculated by employing multiple ways, for example, f(n)=n or

$$f(n) = \left\lfloor \frac{N_{CCE}}{N} \right\rfloor * n.$$

The process of performing HARQ feedback on a resource location corresponding to each code stream in each service in the current subframe by the second unit 22 includes:

when the first unit 21 determines that the total number of code streams IALL for all services in the current sub frame is less than or equal to the set threshold value, the second unit 22 calculates a starting resource location of each code stream in each service in the current subframe according to an offset between the starting resource location of each code stream in each service in the current subframe and a starting resource location $n_{PUCCH}^{(1)}$ of a PUCCH, respectively, and performs HARQ feedback on the calculated starting resource location of each code stream in each service.

The starting resource location of each code stream in each service in the current subframe may be calculated in accordance with the following formula:

$$n_{PUCCH}^{(1,n,i)} = n_{PUCCH}^{(1)} + g(n,i),$$

where $n_{PUCCH}^{(1,n,i)}$ is a starting resource location of a code stream i in a service n in the current subframe;
n is a service index number, n=0, 1, ..., N-1, N is the total number of services in the current subframe;
i is a code stream index number, i=0,1, ..., I-1, I is the number of code streams of the service n; and
g(n, i) is an offset between the starting resource location of the code stream i in the service n in the current subframe and the starting resource location $n_{PUCCH}^{(1)}$ of the PUCCH.

The above g(n, i) may be calculated by employing multiple ways, for example, g(n, i)=i*N+n or g(n, i)=n*I+i.

It will be understood by those of ordinary skill in the art that all or a portion of the steps of the embodiments described above may be implemented by using a computer program flow, a computer program may be stored in a computer-readable storage medium, the computer program is executed on a corresponding hardware platform (such as a system, a device, an apparatus, a means, etc.) that, when executed, includes one or a combination of the steps of a method embodiment.

Optionally, all or a portion of the steps of the embodiment described above may also be implemented by using an integrated circuit, these steps may be separately made into integrated circuit modules or a plurality of modules or steps therein are made into a single integrated circuit module.

The devices/functional modules/functional units in the embodiment described above may be implemented by using a general-purpose computing device, which may be integrated on a single computing device or may be distributed over a network formed by a plurality of computing devices.

The devices/functional modules/functional units in the embodiment described above are implemented in a form of a software functional module and sold or used as a stand-alone product, and may be stored in a computer-readable storage medium. The above-mentioned computer-readable storage medium may be a read-only memory, a disk or an optical disk.

Industrial Applicability

By employing a technical scheme of the present invention, when multiple services of terminal equipment in the same TTI (Transmission Time Interval) use the same DCI and resources of the PUCCH required when HARQ-ACK feedback is performed on each service are the same, the problem related to resource conflicts may be effectively solved. The technical scheme of the present invention not only achieves an effect of distinguishing the resources of the PUCCH, but also effectively combines existing information, thereby avoiding extra signaling overheads when HARQ-ACK feedback is performed on multiple services of a downlink.

**Claims**

1. A method for feedback of hybrid automatic repeat request HARQ applied in a multi-service mode, comprising:

    performing HARQ feedback on a resource location corresponding to each service in a current subframe, or performing HARQ feedback on a resource location corresponding to each code stream in each service in the current subframe, by a terminal equipment according to a comparison result of a total number of code streams IALL for all services in the current subframe and a set threshold value.

2. The method according to claim 1, wherein the process of performing HARQ feedback on the resource location corresponding to each service in the current subframe by the terminal equipment according to the comparison result of the total number of code streams IALL for all services in the current subframe and the set threshold value comprises:

    when the terminal equipment determines that the total number of code streams IALL for all services in the current subframe is greater than the set threshold value, calculating a starting resource location of each service in the current subframe according to an offset between the starting resource location of each service in the current subframe and a starting resource location $n_{PUCCH}^{(1)}$ of a physical uplink control channel PUCCH, respectively, and performing HARQ feedback on the calculated starting resource location of each service.

3. The method according to claim 1, wherein the process of performing HARQ feedback on the resource location corresponding to each code stream in each service in the current subframe by the terminal equipment according to the comparison result of the total number of code streams IALL for all services in the current subframe and the set threshold value comprises:

    when the terminal equipment determines that the total number of code streams IALL for all services in the current subframe is less than or equal to the set threshold value, calculating a starting resource location of each code stream in each service in the current subframe according to an offset between the starting resource location of each code stream in each service in the current subframe and a starting resource location $n_{PUCCH}^{(1)}$ of a PUCCH, respectively, and performing HARQ feedback on the calculated starting resource location of each code stream in each service.

4. The method according to any one of claims 1 to 3, wherein the set threshold value is half of a total number $N_{CCE}$ of control channel elements CCEs occupied by downlink control information DCI.

5. The method according to claim 4, wherein the calculating a starting resource location of each service in the current subframe by the terminal equipment according to an offset between the starting resource location of each service in the current subframe and a starting resource location $n_{PUCCH}^{(1)}$ of a PUCCH, respectively comprises:

    calculating the starting resource location of each service in the current subframe in accordance with a following formula:

    $$n_{PUCCH}^{(1,n)} = n_{PUCCH}^{(1)} + f(n),$$

    wherein the $n_{PUCCH}^{(1,n)}$ is a starting resource location of a service n in the current subframe, the n is a service index number, n=0, 1, ..., N-1, the N is the total number of services in the current subframe, and the f(n) is an offset between the starting resource location of the service n and the starting resource location $n_{PUCCH}^{(1)}$ of the PUCCH.

6. The method according to claim 5, wherein

f(n)=n or $f(n)= \left\lfloor \frac{N_{CCE}}{N} \right\rfloor * n$ .

**7.** The method according to claim 4, wherein the calculating a starting resource location of each code stream in each service in the current subframe by the terminal equipment according to an offset between the starting resource location of each code stream in each service in the current subframe and a starting resource location $n_{PUCCH}^{(1)}$ of a PUCCH, respectively comprises:

calculating the starting resource location of each code stream in each service in the current subframe according to a following formula:

$$n_{PUCCH}^{(1,n,i)} = n_{PUCCH}^{(1)} + g\left(n,i\right),$$

wherein the $n_{PUCCH}^{(1,n,i)}$ is a starting resource location of a code stream i in a service n in the current subframe;
the n is a service index number, n=0, 1, ..., N-1, the N is the total number of services in the current subframe;
the i is a code stream index number, i=0,1, ..., I-1, the I is number of code streams of the service n; and
the g(n, i) is an offset between the starting resource location of the code stream i in the service n in the current subframe and the starting resource location $n_{PUCCH}^{(1)}$ of the PUCCH.

**8.** The method according to claim 7, wherein g(n, i)=i*N+n or g(n, i)=n*I+i.

**9.** A terminal equipment, comprising:

a first unit, which is configured to determine a comparison result of a total number of code streams IALL for all services in a current sub frame and a set threshold value; and
a second unit, which is configured to perform HARQ feedback on a resource location corresponding to each service in a current subframe, or perform HARQ feedback on a resource location corresponding to each code stream in each service in a current subframe, according to a comparison result, which is determined by the first unit, of the total number of code streams IALL for all services in the current subframe and a set threshold value.

**10.** The terminal equipment according to claim 9, wherein

the second unit is configured to, when the first unit determines that the total number of code streams IALL for all services in the current subframe is greater than the set threshold value, calculate a starting resource location of each service in the current subframe according to an offset between the starting resource location of each service in the current subframe and a starting resource location $n_{PUCCH}^{(1)}$ of a physical uplink control channel PUCCH, respectively, and perform HARQ feedback on the calculated starting resource location of each service.

**11.** The terminal equipment according to claim 9, wherein

the second unit is configured to, when the first unit determines that the total number of code streams IALL for all services in the current subframe is less than or equal to the set threshold value, calculate a starting resource location of each code stream in each service in the current subframe according to an offset between the starting resource location of each code stream in each service in the current subframe and a starting resource location $n_{PUCCH}^{(1)}$ of a PUCCH, respectively, and perform HARQ feedback on the calculated starting resource location of each code stream in each service.

**12.** The terminal equipment according to any one of claims 9 to 11, wherein

the set threshold value is half of a total number $N_{CCE}$ of control channel elements CCEs occupied by downlink control information DCI.

**13.** The terminal equipment according to claim 12, wherein the second unit is configured to calculate the starting resource location of each service in the current subframe in accordance with a following formula:

$$n_{PUCCH}^{(1,n)} = n_{PUCCH}^{(1)} + f\left(n\right),$$

wherein the $n_{PUCCH}^{(1,n)}$ is a starting resource location of a service n in the current subframe, the n is a service index number, n=0, 1, ..., N-1, the N is the total number of services in the current subframe, and the f(n) is an offset between the starting resource location of the service n and the starting resource location $n_{PUCCH}^{(1)}$ of the PUCCH

**14.** The terminal equipment according to claim 13, wherein

f(n)=n or $f(n)= \left\lfloor \frac{N_{CCE}}{N} \right\rfloor * n$ .

**15.** The terminal equipment according to claim 12, wherein the second unit is configured to calculate the starting resource location of each code stream in each service in the current subframe according to a following formula:

$$n_{PUCCH}^{(1,n,i)} = n_{PUCCH}^{(1)} + g(n,i),$$

wherein the $n_{PUCCH}^{(1,n,i)}$ is a starting resource location of a code stream i in a service n in the current subframe;

the n is a service index number, n=0, 1, ..., N-1, the N is the total number of services in the current subframe;

the i is a code stream index number, i=0,1, ..., I-1, the I is number of code streams of the service n; and

the g(n, i) is an offset between the starting resource location of the code stream i in the service n in the current subframe and the starting resource location $n_{PUCCH}^{(1)}$ of the PUCCH.

**16.** The terminal equipment according to claim 15, wherein
g(n, i)=i*N+n or g(n, i)=n*I+i.

**17.** A computer readable storage medium storing a computer-executable instruction, which is configured to perform the method according to any one of claims 1 to 8.

9

| A terminal equipment analyzes the number of services N in a current subframe | 101 |

$\downarrow$

| The terminal equipment analyzes the number of code streams I of each service | 102 |

$\downarrow$

| The terminal equipment calculates the total number of code streams IALL of all services | 103 |

$\downarrow$

| The terminal equipment selects a corresponding resource location calculating method according to a relation between the total number of code streams and the NCCE | 104 |

$\downarrow$

| The terminal equipment calculates a resource location of the PUCCH by substituting the number of services and the number of code streams into the selected number | 105 |

$\downarrow$

| The terminal equipment performs HARQ feedback on the calculated resource location of the PUCCH | 106 |

**FIG.1**

First unit — 21

Second unit — 22

**FIG.2**

# INTERNATIONAL SEARCH REPORT

| International application No. |
| --- |
| **PCT/CN2015/078892** |

## A. CLASSIFICATION OF SUBJECT MATTER

H04L 1/18 (2006.01) i

According to International Patent Classification (IPC) or to both national classification and IPC

## B. FIELDS SEARCHED

Minimum documentation searched (classification system followed by classification symbols)

H04L; H04Q; H04W; H04B

Documentation searched other than minimum documentation to the extent that such documents are included in the fields searched

Electronic data base consulted during the international search (name of data base and, where practicable, search terms used)

WPI; EPODOC; CNPAT; CNKI; IEEE: hybrid automatic retransmission, code stream, service, threshold value, physical uplink control channel, HARQ, IALL, position, code, PUCCH, offset, feedback

## C. DOCUMENTS CONSIDERED TO BE RELEVANT

| Category* | Citation of document, with indication, where appropriate, of the relevant passages | Relevant to claim No. |
| --- | --- | --- |
| A | CN 101635616 A (ZTE CORP.), 27 January 2010 (27.01.2010) abstract, description, page 4, paragraph 2 to page 6, paragraph 2 | 1-17 |
| A | CN 101610137 A (ZTE CORP.), 23 December 2009 (23.12.2009), the whole document | 1-17 |
| A | WO 2012035732 A1 (PANASONIC CORPORATION), 22 March 2012 (22.03.2012), the whole document | 1-17 |
| A | WO 2014183274 A1 (TELEFONAKTIEBOLAGET L M ERICSSONPUBL), 20 November 2014 (20.11.2014), the whole document | 1-17 |
| A | US 2010271929 A1 (NEC LABORATORIES AMERICA, INC.), 28 October 2010 (28.10.2010), the whole document | 1-17 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 16 June 2015 (16.06.2015) | **29 June 2015 (29.06.2015)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**SHEN, Minjie**<br><br>Telephone No.: (86-10) **62413417** |

Form PCT/ISA/210 (second sheet) (July 2009)

## INTERNATIONAL SEARCH REPORT
Information on patent family members

International application No.

**PCT/CN2015/078892**

| Patent Documents referred in the Report | Publication Date | Patent Family | Publication Date |
|---|---|---|---|
| CN 101635616 A | 27 January 2010 | CN 101635616 B | 10 October 2012 |
| CN 101610137 A | 23 December 2009 | CN 101610137 B | 16 January 2013 |
| WO 2012035732 A1 | 22 March 2012 | US 2013163522 A1 | 27 June 2013 |
| | | JP 5668072 B2 | 12 February 2015 |
| WO 2014183274 A1 | 20 November 2014 | None | |
| US 2010271929 A1 | 28 October 2010 | US 8446811 B2 | 21 May 2013 |

Form PCT/ISA/210 (patent family annex) (July 2009)